# EUROPEAN PATENT SPECIFICATION

(11) **EP 3 150 943 B1**
(45) Date of publication and mention of the grant of the patent: **27.03.2019**
(21) Application number: 15876401.9
(22) Date of filing: 17.07.2015
(51) Int. Cl.: F24F 11/89, F24F 110/00, F25B 13/00, F24F 11/30

(54) **AIR CONDITIONING APPARATUS INCLUDING INDOOR UNIT AND OUTDOOR UNIT**
KLIMAGERÄT MIT INNENEINHEIT UND AUSSENEINHEIT
CLIMATISEUR COMPRENANT UNE UNITÉ INTÉRIEURE ET UNE UNITÉ EXTÉRIEURE

(43) Date of publication of application: 05.04.2017
(73) Proprietor: Mitsubishi Electric Corporation, Chiyoda-ku Tokyo 100-8310 (JP)
(72) Inventor: WATANABE, Kazuki, Tokyo 100-8310 (JP); TANAKA, Kenyu, Tokyo 100-8310 (JP); TAKAGI, Masahiko, Tokyo 100-8310 (JP); SUZUKI, Yasuhiro, Tokyo 100-8310 (JP)
(74) Representative: Pfenning, Meinig & Partner mbB
(86) International application number: PCT/JP2015/070579
(87) International publication number: WO 2017/013715

(56) References cited:
- WO-A1-2013/038704
- WO-A1-2015/029678
- WO-A1-2015/029678
- WO-A1-2015/072311
- JP-A- H0 861 702
- JP-A- H06 323 604
- JP-A- H10 103 742
- JP-A- H10 132 368
- JP-A- H11 173 713
- JP-A- 2001 208 392
- JP-A- 2005 009 857
- JP-A- 2012 013 348
- JP-A- 2015 094 566
- JP-A- 2015 094 566

## Description

### Technical Field

The present invention relates to an indoor unit of an air-conditioning apparatus and the air-conditioning apparatus including the indoor unit, and particularly to an indoor unit of an air-conditioning apparatus that performs predetermined control when refrigerant leaks from the air-conditioning apparatus and the air-conditioning apparatus including the indoor unit.

### Background Art

A flammable refrigerant, such as R32, is used as a refrigerant filled in a refrigerant circuit of an air-conditioning apparatus in some cases. When a flammable refrigerant leaks into a room with a weak airflow in an air-conditioning target space (e.g., in a room), the refrigerant remains in the room without diffusing in the room. Accordingly, the refrigerant in a flammable concentration might remain in the room and form a flammable area.

To prevent this, an indoor unit that performs various controls in a case where refrigerant leaks in an air-conditioning apparatus is proposed. For example, in a proposed conventional air-conditioning apparatus, a location of a heat source in air-conditioning target space is determined by using a temperature sensor, air is supplied to a place where the heat source is not provided, and the leaked refrigerant is conveyed to the place without the heat source (see, for example, Patent Literature 1).

Another proposed conventional air-conditioning apparatus includes a mechanism for discharging refrigerant to the outside of the room in a case where refrigerant leakage occurs (see, for example, Patent Literature 2). Patent Literature 3 discloses an indoor unit for an air conditioner with an indoor fan and a refrigerant sensor. Patent Literature 3 thereby discloses an air-conditioning apparatus according to the preamble of claim 1.

Patent Literature 4 shows a refrigerant leakage detection sensor which is placed at a bottom of a casing.

### Citation List

### Patent Literatures

Patent Literature 1: Japanese Unexamined Patent Application Publication No. 2012-13348
Patent Literature 2: Japanese Unexamined Patent Application Publication No. 2001-336841
Patent Literature 3: JP 2015 094 566 A
Patent Literature 4: WO 2015/072311 A1

### Summary of Invention

### Technical Problem

In a conventional air-conditioning apparatus, there is a possibility that refrigerant that has leaked from the air-conditioning apparatus is blown to a place where an ignition appliance, such as a gas cooking appliance or a stove, having a low temperature while power supply is off is provided so that a flammable area is formed in this place where the ignition appliance is provided. Thus, when the ignition appliance is turned on, the refrigerant in the flammable area might be ignited.

The present invention has been made to overcome problems as described above, and has an object of providing an indoor unit of an air-conditioning apparatus that can further ensure suppression of formation of a flammable area and the air-conditioning apparatus including the indoor unit.

### Solution to Problem

An air-conditioning apparatus according to the present invention is defined in claim 1. The indoor unit of said air-conditioning apparatus includes: a casing having an air inlet, an air outlet, and an air passage extending from the air inlet to the air outlet; an airflow direction adjusting member having a plate shape, disposed at the air outlet of the casing, and configured to change a direction of air blowing from the air outlet; an indoor heat exchanger disposed in the air passage of the casing; an indoor blower device disposed in the air passage of the casing and configured to supply air to the indoor heat exchanger; a refrigerant leakage sensor disposed in the air passage of the casing and configured to detect refrigerant leakage; and a controller configured to rotate the airflow direction adjusting member and cause the indoor blower device to operate when determining that refrigerant leakage is present based on a detection result of the refrigerant leakage sensor. Preferred embodiments are defined in the dependent claims.

### Advantageous Effects of Invention

In the indoor unit of the air-conditioning apparatus according to the present invention, when determining that refrigerant leakage is present, the airflow direction adjusting member is operated and the indoor blower device is also operated. Thus, refrigerant that has leaked into air-conditioning target space is diffused, thereby further ensuring suppression of formation of a flammable area.

### Brief Description of Drawings

Fig. 1 illustrates an example of a refrigerant circuit configuration of an air-conditioning apparatus 200 according to Embodiment of the present invention.
Fig. 2 is a front view illustrating an indoor unit 100 of the air-conditioning apparatus 200 according to Embodiment of the present invention.
Fig. 3 is an explanatory view of an outer structure and an inner structure of the indoor unit 100 of the air-conditioning apparatus 200 according to Embodiment.
Fig. 4 is an explanatory view of louvers 31, which constitute an airflow direction adjusting member, and vanes 30, which constitute an airflow direction adjusting member, at an air outlet 1A of the indoor unit 100 of the air-conditioning apparatus 200 according to Embodiment.
Fig. 5 is an explanatory view illustrating a state in which the vanes 30 are removed from the indoor unit 100 illustrated in Fig. 4.
Fig. 6 is an explanatory view in which the louvers 31 are removed from the indoor unit 100 illustrated in Fig. 4.
Fig. 7 is an explanatory view illustrating, for example, a configuration of a controller 7 of the indoor unit 100 of the air-conditioning apparatus 200 according to Embodiment of the present invention.

### Description of Embodiment

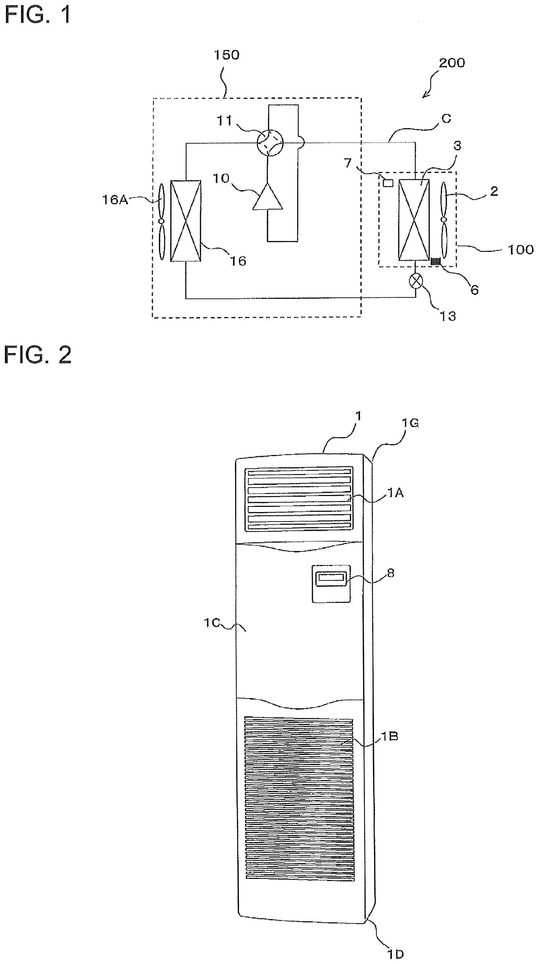

Embodiment of an indoor unit of an air-conditioning apparatus according to the present invention will be described with reference to the drawings. The present invention is not limited to Embodiment below. In the drawings including Fig. 1, the dimensional relationship among components can be different from those of actual components.

### Embodiment

Fig. 1 illustrates an example of a refrigerant circuit configuration of an air-conditioning apparatus 200 according to Embodiment. Referring to Fig. 1, a configuration of the air-conditioning apparatus 200, for example, will be described.

An improvement is made on an indoor unit 100 of the air-conditioning apparatus 200 according to Embodiment to further ensure suppression of formation of a flammable area.

### [Configuration]

As illustrated in Fig. 1, the air-conditioning apparatus 200 includes the indoor unit 100 disposed in, for example, air-conditioning target space (e.g., a room, a room in a building, or a warehouse) and an outdoor unit 150 disposed outside the air-conditioning target space, for example. The air-conditioning apparatus 200 includes a refrigerant circuit C constituted by connecting the indoor unit 100 and the outdoor unit 150 to each other by a refrigerant pipe.

The air-conditioning apparatus 200 includes a compressor 10 for compressing refrigerant, a channel switching valve 11 for use in switching between cooling and heating, for example, an outdoor heat exchanger 16 serving as a condenser (radiator) in cooling and as an evaporator in heating, an expansion device 13 for reducing the pressure of refrigerant, and an indoor heat exchanger 3 serving as an evaporator in cooling and as a condenser in heating. The outdoor heat exchanger 16 is provided with an outdoor blower device 16A for use in promoting heat exchange between air and refrigerant. The compressor 10 is constituted by, for example, a compression mechanism including a compression chamber in which refrigerant is compressed and an electric motor for driving the compression mechanism. The electric motor is constituted by, for example, a stator around which a coil is wound and a rotor connected to a fan through a shaft.

Refrigerant used in the air-conditioning apparatus 200 will now be described. Examples of refrigerant enclosed in the refrigerant circuit C include an R32 refrigerant. The R32 refrigerant is flammable and heavier than the air. The refrigerant enclosed in the refrigerant circuit C is not limited to, for example, the R32 refrigerant. Advantages similar to those of the indoor unit 100 of the air-conditioning apparatus 200 according to Embodiment can be obtained as long as the refrigerant is flammable.

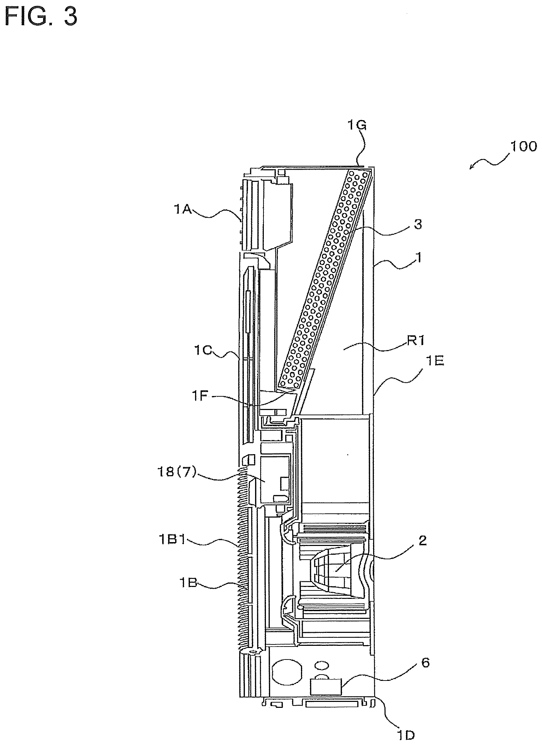

Fig. 2 is a front view of the indoor unit 100 of the air-conditioning apparatus 200 according to Embodiment. Fig. 3 is an explanatory view of an outer structure and an inner structure of the indoor unit 100 of the air-conditioning apparatus 200 according to Embodiment. Fig. 3 illustrates the external structure and the inner structure of the indoor unit 100 when viewed from a side thereof. Referring to Figs. 2 and 3, a configuration of the indoor unit 100, for example, will be described.

As illustrated in Fig. 2, the indoor unit 100 includes a casing 1 constituting, for example, an enclosure, an indoor blower device 2 disposed in the casing 1, and an indoor heat exchanger 3 disposed in the casing 1 and serving as a condenser or an evaporator.

The indoor unit 100 also includes a refrigerant leakage sensor 6 for use in detecting refrigerant that leaks into the casing 1, a control box 18 including a controller 7 for controlling components, and a display panel 8 that provides an display indicating that the indoor unit 100 is in operation.

### (Casing 1)

The casing 1 has a rectangular parallelepiped enclosure, and an air passage R1 in which air flows is formed in the casing 1. The casing 1 has an air outlet 1A for releasing air and an air inlet 1B for taking air therein. In the casing 1, the air inlet 1B, the indoor blower device 2, the indoor heat exchanger 3, and the air outlet 1A are arranged in this order from the downstream side in an air flow direction. The air inlet 1B has a grille part 1B1 extending in parallel with the horizontal direction. The grille part 1B1 can prevent a finger to enter the air inlet 1B, for example.

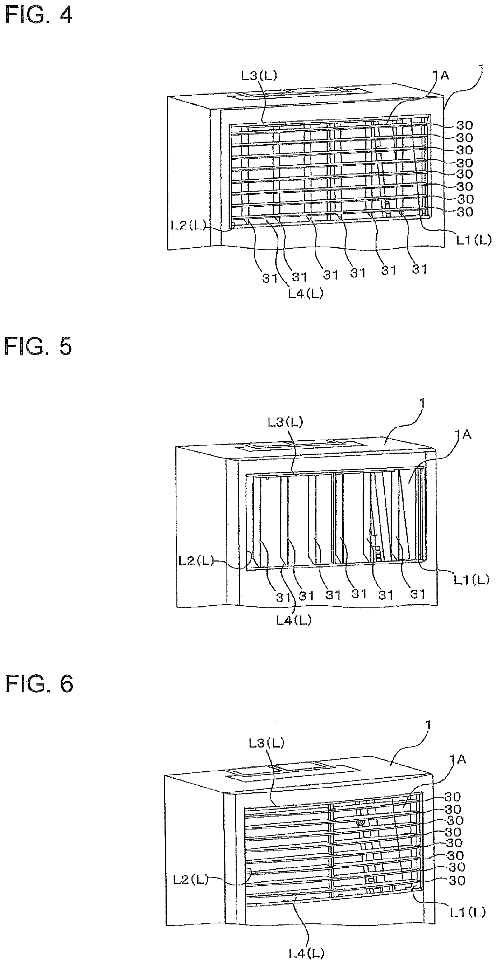

The air outlet 1A has rotatable louvers 31 and rotatable vanes 30. The louvers 31 can laterally adjust the direction of air released by the action of the indoor blower device 2. The vanes 30 can vertically adjust the direction of air released by the action of the indoor blower device 2. The configurations of the louvers 31 and the vanes 30 will be specifically described with reference to Figs. 4 to 6.

The casing 1 includes a front panel 1C constituting a part of a front surface of the indoor unit 100, a bottom surface part 1D supporting a self-weight of the casing, a rear part 1E extending vertically, a support part 1F supporting a lower end of the indoor heat exchanger 3, and an upper surface part 1G constituting an upper surface of the indoor unit 100.

The front panel 1C has a surface (front surface) serving as a design surface of the indoor unit 100. The air inlet 1B is formed in a lower portion of the front panel 1C. The air outlet 1A is formed in an upper portion of the front panel 1C. In addition, the display panel 8 is disposed between the air inlet 1B and the air outlet 1A in the front panel 1C. A lower surface of the bottom surface part 1 D is provided with, for example, a leg placed on the floor of air-conditioning target space. The refrigerant leakage sensor 6 is disposed on top of the bottom surface part 1D. The rear part 1E is disposed at the rear of the indoor heat exchanger 3. The distance between the rear part 1E and the indoor heat exchanger 3 that are opposed to each other decreases toward the upper end of the indoor heat exchanger 3.

The support part 1F is disposed at the rear of the front panel 1C. The support part 1F is disposed above the indoor blower device 2. The upper surface part 1G is provided perpendicularly to the rear part 1E. The upper end of the indoor heat exchanger 3 is disposed at the rear end of the upper surface part 1G, and the air outlet 1A is disposed at the front end of the upper surface part 1G.

### (Indoor Air-sending Device 2)

The indoor blower device 2 is constituted by, for example, a fan and a motor for driving the fan, and is configured to take air in the casing 1 and release air to the outside of the casing 1. The indoor blower device 2 is disposed upstream of the indoor heat exchanger 3. The indoor blower device 2 is disposed below the indoor heat exchanger 3.

### (Indoor Heat Exchanger 3)

The indoor heat exchanger 3 is tilted in such a manner that a lower portion of the indoor heat exchanger 3 is closer to the front surface than an upper portion of the indoor heat exchanger 3 is. The indoor heat exchanger 3 is, for example, a fin-and-tube heat exchanger. The indoor heat exchanger 3 is connected to the outdoor heat exchanger 16 provided in the outdoor unit 150 through a refrigerant pipe. The air outlet 1A is disposed in front of the indoor heat exchanger 3. More specifically, the upper end of the front surface of the indoor heat exchanger 3 faces the air outlet 1A of the casing 1.

### (Refrigerant Leakage Sensor 6)

The refrigerant leakage sensor 6 is used to detect refrigerant remaining in a lower portion of the casing 1 when refrigerant leaks into the casing 1. The refrigerant leakage sensor 6 is provided in the air passage R1. The refrigerant leakage sensor 6 is disposed in a lower portion of the casing 1. The refrigerant leakage sensor 6 is disposed at a height of 10 cm or less from the floor, for example.

In a case where refrigerant leakage occurs because of, for example, damage on a portion of the refrigerant pipe connected to the indoor heat exchanger 3 and located in the casing 1, a large part of the flammable refrigerant moves below the indoor heat exchanger 3 when, and because in many cases, the refrigerant is heavier than air. The refrigerant leakage sensor 6 can detect the refrigerant that has moved below the indoor heat exchanger 3. The refrigerant leakage sensor 6 may be of various types such as an oxygen concentration type and a flammable gas detection type.

### (Control Box 18)

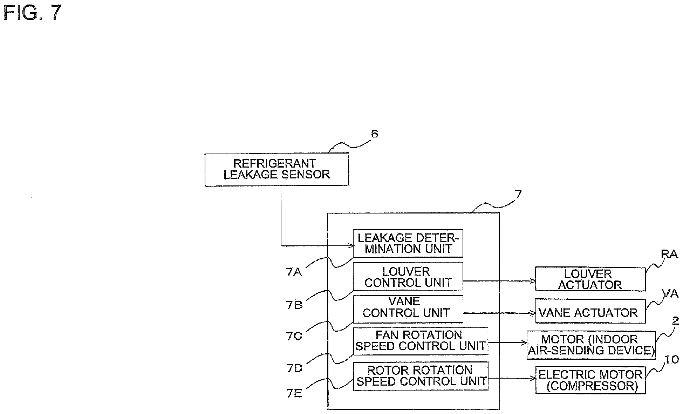

The control box 18 includes a controller 7 configured to perform various controls, for example. The controller 7 determines whether refrigerant leakage is present or not based on a detection result of the refrigerant leakage sensor 6. Based on this determination result, the controller 7 controls the indoor blower device 2, the louvers 31, and the vanes 30, for example. The configuration of the controller 7 will be specifically described with reference to Fig. 7.

### (Display Panel 8)

The display panel 8 is disposed in an upper portion of the casing 1, for example. The display panel 8 includes a display unit that can display information such as a cooling operation, a heating operation, and a set temperature, for example. The display panel 8 also includes, for example, an operation unit that receives the type of an operation of the indoor unit 100.

### [Detailed Description of Louvers 31 and Vanes 30]

Fig. 3 is an explanatory view of an outer structure and an inner structure of the indoor unit 100 of the air-conditioning apparatus 200 according to Embodiment. Fig. 4 is an explanatory view of the louvers 31, which are an airflow direction adjusting member, and the vanes 30, which are an airflow direction adjusting member, at the air outlet 1A of the indoor unit 100 of the air-conditioning apparatus 200 according to Embodiment. Fig. 5 is an explanatory view illustrating a state in which the vanes 30 are removed from the indoor unit 100 illustrated in Fig. 4. Referring to Figs. 3 to 5, the configurations of the louvers 31 and the vanes 30 that are the airflow direction adjusting members, for example, will be described.

The multiple louvers 31 are provided at the air outlet 1A. The number of the louvers 31 is not limited to a plural number, and a single louver 31 may be provided. The louvers 31 are attached to an opening rim L of the air outlet 1A. The opening rim L is rectangular. The opening rim L includes opposed side rims L1 and L2 and opposed upper and lower rims L3 and L4. The side rims L1 and L2 are orthogonal to the upper and lower rims L3 and L4.

The vanes 30 are rotatably coupled to the side rim L1 at one end, and are rotatably coupled to the side rim L2 at the other end. The louvers 31 are disposed at the rear of the vanes 30. That is, the louvers 31 are disposed upstream of the vanes in the air flow direction. In the indoor unit 100, the direction of the vanes 30 can be vertically changed by the action of a vane actuator (not shown) whose operation is controlled by the controller 7.

The multiple louvers 31 are also provided at the air outlet 1A. The number of the louvers 31 is not limited to a plural number, and a single louver 31 may be provided. The louvers 31 are attached to the upper rim L3 and the lower rim L4 of the opening rim L of the air outlet 1A. Specifically, the louvers 31 are rotatably coupled to the upper rim L3 at the upper end, and are rotatably coupled to the lower rim L4 at the lower end. The vanes 30 are disposed forward of the louvers 31, and face the louvers 31. In the indoor unit 100, the direction of the louvers 31 can be laterally changed by the action of a louver actuator (not shown) controlled by the controller 7.

### [Detailed Description of Control Device 7]

Fig. 7 is an explanatory view illustrating, for example, a configuration of the controller 7 of the indoor unit 100 of the air-conditioning apparatus 200 according to Embodiment. Referring to Fig. 7, functional blocks of the refrigerant leakage sensor 6 and the controller 7 and the actuators, for example, controlled by the controller 7 will be described.

The controller 7 includes a leakage determination unit 7A that receives a detection result of the refrigerant leakage sensor 6, a louver control unit 7B that controls a louver actuator RA that operates the louvers 30, a vane control unit 7C for controlling a vane actuator VA for causing the vanes 31 to operate, a fan rotation speed control unit 7D for controlling a motor of the indoor blower device 2, and a rotor rotation speed controller 7E that controls an electric motor provided in the compressor 10.

The leakage determination unit 7A determines whether refrigerant leakage occurs or not, based on an output (e.g., voltage) from the refrigerant leakage sensor 6. If the refrigerant leakage sensor 6 detects the presence of refrigerant leakage, the leakage determination unit 7A determines that refrigerant leakage is present. If the output of the refrigerant leakage sensor 6 changes to reach a predetermined first range, for example, the leakage determination unit 7A determines that refrigerant leakage is present. The leakage determination unit 7A operates irrespective of whether a user turns the indoor unit 100 on or off. That is, the indoor unit 100 determines refrigerant leakage irrespective of an on or off state of the indoor unit 100.

The louver control unit 7B controls the louver actuator RA based on the determination result of the leakage determination unit 7A. If the leakage determination unit 7A determines that refrigerant leakage occurs, the louver control unit 7B controls the louver actuator RA so that the louvers 31 perform a swing operation, irrespective of whether the indoor unit 100 is on or off. Here, the swing operation refers to an operation of alternately switching the direction of the louvers 31 between a first direction (right) and a second direction (left) opposite to the first direction. The louver actuator RA can be, for example, a driving part such as a motor.

The vane control unit 7C controls the vane actuator VA based on the determination result of the leakage determination unit 7A. If the leakage determination unit 7A determines that refrigerant leakage is present, the vane control unit 7C controls the vane actuator VA in accordance with the angle of the vanes 30, irrespective of whether the indoor unit 100 is on or off. This control of the vane actuator VA can rotate the vanes 30 and change the angle of the vanes 30. For example, in a case where the vanes 30 are oriented downward, the angle of the vanes 30 may be changed so that the vanes 30 are in parallel with the horizontal direction or the vanes 30 are oriented upward. After the vanes 30 have rotated to change the angle of the vanes 30, the angle of the vanes 30 are maintained. In a manner similar to the louver actuator RA, the vane actuator VA can be, for example, a driving part such as a motor.

If it is determined that refrigerant leakage is present while the indoor unit 100 is in operation (the indoor blower device 2 is in operation), the fan rotation speed control unit 7D increases a fan rotation speed of the indoor blower device 2. The fan rotation speed control unit 7D may increase the fan rotation speed of the indoor blower device 2 from the speed at a current operation or may increase the fan rotation speed of the indoor blower device 2 to a maximum fan rotation speed in an air conditioning operation. Furthermore, if the leakage determination unit 7A determines that refrigerant leakage is present, the fan rotation speed control unit 7D may increase the fan rotation speed of the indoor blower device 2 to a speed higher than the maximum fan rotation speed in the air conditioning operation. This is because the case of occurrence of refrigerant leakage has some degree of urgency, and thus, there is no other choice but to somewhat sacrifice comfort of a user in the air-conditioning target space.

The fan rotation speed control unit 7D also causes the indoor blower device 2 to operate in a case where it is determined that refrigerant leakage is present while the operation of the indoor unit 100 is suspended (the indoor blower device 2 is suspended). In this case, the fan rotation speed of the indoor blower device 2 may be increased to the maximum fan rotation speed in the air conditioning operation or to a fan rotation speed higher than the maximum fan rotation speed in the air conditioning operation.

The louver control unit 7B, the vane control unit 7C, and the fan rotation speed control unit 7D individually control the actuator and other components, thereby further ensuring diffusion of refrigerant that has leaked into the air-conditioning target space. Thus, it is possible to suppress formation of a flammable area caused by refrigerant in a flammable concentration remaining in the air-conditioning target space.

If the leakage determination unit 7A determines that refrigerant leakage occurs, the rotor rotation speed controller 7E stops the compressor 10 in a case where the compressor 10 is in operation. If the compressor 10 continues operating at the occurrence of refrigerant leakage due to damage of, for example, the indoor heat exchanger 3, the amount of refrigerant leakage will increase. To prevent this, when determining that refrigerant leakage is present, the compressor 10 is stopped so that the amount of refrigerant leakage is suppressed. Thus, if the leakage determination unit 7A determines that refrigerant leakage occurs, the rotor rotation speed controller 7E controls an electric motor of the compressor 10 to stop the compressor 10.

### [Advantages of Indoor Unit 100 of Air-conditioning Apparatus 200 according to Embodiment]

An indoor unit 100 of the air-conditioning apparatus 200 according to Embodiment includes: a casing 1 including an air inlet 1B, an air outlet 1A, and an air passage R1 extending from the air inlet 1B to the air outlet 1A; an airflow direction adjusting member (louvers 31 and vanes 30) having a plate shape, disposed at the air outlet 1A of the casing 1, and configured to change a direction of air blowing from the air outlet 1A; an indoor heat exchanger 3 disposed in the air passage R1 of the casing 1; an indoor blower device 2 disposed in the air passage R1 of the casing 1 and configured to supply air to the indoor heat exchanger 3; a refrigerant leakage sensor 6 disposed in the air passage R1 of the casing 1 and configured to detect refrigerant leakage; and a controller 7 configured to move the airflow direction adjusting member and cause the indoor blower device 2 to operate when determining that refrigerant leakage is present based on a detection result of the refrigerant leakage sensor 6. This configuration further ensures diffusion of refrigerant that has leaked into an air-conditioning target space, and can suppress formation of a flammable area caused by refrigerant in a flammable concentration remaining in the air-conditioning target space.

The indoor unit 100 of the air-conditioning apparatus 200 according to Embodiment can suppress formation of a flammable area in air-conditioning target space without being provided with a mechanism for discharging refrigerant that has leaked into the air-conditioning target space to the outside of the air-conditioning target space (e.g., outdoors). Thus, the indoor unit 100 of the air-conditioning apparatus 200 according to Embodiment can suppress an increase in fabrication costs.

The controller 5 performs determination of refrigerant leakage irrespective of whether the indoor unit 100 of the air-conditioning apparatus 200 according to Embodiment is on or off. Thus, even when refrigerant leakage occurs due to damage on, for example, the refrigerant pipe while the indoor unit 100 is off, the controller 5 detects the refrigerant leakage and causes the airflow direction adjusting member to operate and the indoor blower device 2 to operate so that refrigerant that has leaked into the air-conditioning target space can be diffused.

In the indoor unit 100 of the air-conditioning apparatus 200 according to Embodiment, when determining that refrigerant leakage is present, the controller 7 performs a swing operation of alternately changing a direction of the airflow direction adjusting member (louvers 31 and vanes 30) between a first direction and a second direction opposite to the first direction. The swing operation of the airflow direction adjusting member can avoid uneven distribution of leaked refrigerant to left or right space in the air-conditioning target space or uneven distribution of leaked refrigerant in lower or upper space in the air-conditioning target space. This configuration further ensures diffusion of leaked refrigerant, and can suppress formation of a flammable area caused by refrigerant in a flammable concentration remaining in the air-conditioning target space. In addition, even in a case where an obstacle (e.g., furniture) is present in front of the indoor unit 100, the indoor unit 100 can supply air to the air-conditioning target space while detouring the obstacle to perform a swing operation so that formation of a flammable area in the air-conditioning target space can be suppressed.

In the indoor unit 100 of the air-conditioning apparatus 200 according to Embodiment, the airflow direction adjusting member includes a first airflow direction plate (louvers 31) which extends in parallel to a vertical direction and whose orientation is changeable in a lateral direction, and a second airflow direction plate (vanes 30) which faces the first airflow direction plate (louvers 31) and whose orientation is changeable in the vertical direction, and when determining that refrigerant leakage is present, the controller 7 performs a swing operation of alternately changing a direction of the first airflow direction plate (louvers 31), and rotates the second airflow direction plate (vanes 30) upward in a state where the second airflow direction plate (vanes 30) faces downward. This configuration can avoid uneven distribution of leaked refrigerant in left or right space in the air-conditioning target space.

The flammable refrigerant, such as an R32 refrigerant, is heavier than the air. When the refrigerant leaks, the refrigerant descends to the floor and remains in a lower portion of the air-conditioning target space. Thus, the configuration described above can avoid uneven distribution of refrigerant in lower space in the air-conditioning target space.

In this example, when determining that refrigerant leakage is present, the controller 7 performs a swing operation of the first airflow direction plate (louvers 31) as well as rotating the second airflow direction plate (vanes 30). If it is determined that refrigerant leakage occurs, the controller 7 may move only the first airflow direction plate without moving the second airflow direction plate. This configuration can also avoid uneven distribution of refrigerant in the air-conditioning target space.

If it is determined that refrigerant leakage occurs, the controller 7 may move only the second airflow direction plate without moving the first airflow direction plate. This configuration can also avoid uneven distribution of refrigerant in lower space of the air-conditioning target space.

According to the invention, the controller 7 has a time lag between performing a swing operation of the first airflow direction plate and a rotation operation of the second airflow direction plate. That is, after the swing operation of the first airflow direction plate has been performed, the rotation operation of the second airflow direction plate may be performed.

In the indoor unit 100 of the air-conditioning apparatus 200 according to Embodiment, the controller 7 determines a speed of the swing operation of the airflow direction adjusting member (louvers 31 and vanes 30) based on a fan rotation speed of the indoor blower device 2.

When air blowing from the air outlet 1A passes through the louvers 31 and the vanes 30, a pressure loss of air occurs. To prevent this, in a case where the fan rotation speed of the indoor blower device 2 is high, the controller 7 reduces the speed of the swing operation of the airflow direction adjusting member. In a case where the fan rotation speed of the indoor blower device 2 is low, the controller 7 increases the speed of the swing operation of the airflow direction adjusting member. That is, the controller 7 controls the indoor blower device 2 in such a manner that the speed of the swing operation of the airflow direction adjusting member in a case where the fan rotation speed of the indoor blower device 2 is low is higher than the speed of the swing operation of the airflow direction adjusting member in a case where the fan rotation speed of the indoor blower device 2 is high.

This configuration can reduce an increase in pressure loss of air blowing from the air outlet 1A. Thus, air can be more efficiently released from the air outlet 1A into the air-conditioning target space, thereby further ensuring diffusion of refrigerant in the air-conditioning target space.

In the indoor unit 100 of the air-conditioning apparatus 200 according to Embodiment, when determining that refrigerant leakage is present, the controller 7 causes the indoor blower device 2 to operate at a fan rotation speed higher than a maximum value of a fan rotation speed of the indoor blower device 2 in an air conditioning operation. The case of occurrence of refrigerant leakage has urgency because an increased probability of ignition of refrigerant. Thus, the fan rotation speed of the indoor blower device 2 is increased even with sacrifice of, for example, comfort of a user in the air-conditioning target space. This configuration further ensures diffusion of refrigerant in the air-conditioning target space.

In the indoor unit 100 of the air-conditioning apparatus 200 according to Embodiment, the casing 1 is of a floor-standing type including a bottom surface part 1D serving as a placement surface, the air inlet 1B is disposed in a lower portion of the casing 1 and the air outlet 1A is disposed in an upper portion of the casing 1, and the refrigerant leakage sensor 6 is disposed in a lower portion of the casing 1. The flammable refrigerant, such as an R32 refrigerant, can be heavier than the air. When the refrigerant leaks, the refrigerant descends. The configuration described above ensures detection of such descending refrigerant by the refrigerant leakage sensor 6.

An air-conditioning apparatus 200 according to Embodiment includes an indoor unit 100 and an outdoor unit 150 connected to the indoor unit 100 through a refrigerant pipe, and a flammable refrigerant circulates between the indoor unit 100 and the outdoor unit 150. That is, since the air-conditioning apparatus 200 includes the indoor unit 100, the air-conditioning apparatus 200 ensures diffusion of refrigerant that has leaked into the air-conditioning target space, and can suppress formation of a flammable area caused by refrigerant in a flammable concentration remaining in the air-conditioning target space.

### Reference Signs List

1 casing, 1A air outlet, 1B air inlet, 1B1 grille part, 1C front panel, 1D bottom surface part, 1E rear part, 1F support part, 1G upper surface part, 2 indoor blower device, 3 indoor heat exchanger, 6 refrigerant leakage sensor, 7 controller, 7A leakage determination unit, 7B louver controller, 7C vane controller, 7D fan rotation speed controller, 7E rotor rotation speed controller, 8 display panel, 10 compressor, 11 channel switching valve, 13 reducing device, 16 outdoor heat exchanger, 16A outdoor blower device, 18 control box, 30 vane, 31 louver, 100 indoor unit, 150 outdoor unit, 200 air-conditioning apparatus, C refrigerant circuit, L opening rim, L1 side rim, L2 side rim, L3 upper rim, L4 lower rim, R1 air passage, RA louver actuator, VA vane actuator.

## Claims

1. An air-conditioning apparatus (200) being configured to be filled with a flammable refrigerant having a density higher than air under atmospheric pressure including at least
an outdoor unit (150) including an outdoor heat exchanger (16),
an indoor unit (100) connected to the outdoor unit (150) via a refrigerant pipe,
the indoor unit (100) comprising:
a casing (1) being of a floor-standing type including a bottom surface part (1D) serving as a placement surface having
an air inlet (1B) formed in a lower portion of the casing (1),
an air outlet (1A) formed in an upper portion of the casing above the air inlet (1B), and
an air passage (R1) formed in the casing (1) and extending from the air inlet (1B) to the air outlet (1A);
an airflow direction adjusting member (30, 31) having a plate shape, disposed at the air outlet (1A) of the casing (1), and configured to change a direction of air blowing from the air outlet (1A);
an indoor heat exchanger (3) disposed in the air passage (R1) in the casing (1); **characterized by**
an indoor blower device (2) disposed in the air passage (R1) in the casing (1) upstream of and below the indoor heat exchanger (3); and
a refrigerant leakage sensor (6) disposed in the air passage (R1) in the lower portion of the casing (1) on top of the bottom surface part (1D),
the air-conditioning apparatus (200) further comprising a controller (7) being configured to, when the refrigerant leakage sensor (6) detects that refrigerant leakage is present, cause the indoor blower device (2) to operate and rotate the airflow direction adjusting member (30, 31), wherein
the airflow direction adjusting member (30, 31) includes
a first airflow direction plate (31) which extends in parallel to a vertical direction and whose orientation is changeable in a lateral direction, and
a second airflow direction plate (30) which extends in parallel to the lateral direction and faces the first airflow direction plate (31), and whose orientation is changeable in the vertical direction, and
the controller (7) is configured to, when the refrigerant leakage sensor (6) detects that refrigerant leakage is present,
perform a swing operation of alternately changing a direction of the first airflow direction plate (31) in the lateral direction, and
rotate the second airflow direction plate (30) upward in a state where the second airflow direction plate (30) faces downward and being configured to rotate the second airflow direction plate (30) after performing the swing operation of the first airflow direction plate (31), and have a time lag between performing the swing operation of the first airflow direction plate (31) and the rotation of the second airflow direction plate (30)..

2. The air-conditioning apparatus (200) of claim 1, wherein
the controller (7) is configured to perform, when the refrigerant leakage sensor (6) detects that refrigerant leakage is present, a swing operation of alternately changing a direction of the airflow direction adjusting member (30, 31) between a first direction and a second direction opposite to the first direction.

3. The air-conditioning apparatus (200) of claim 1 or 2, wherein the controller (7) is configured to base a speed of the swing operation of the airflow direction adjusting member (30, 31) on a fan rotation speed of the indoor blower device (2).

4. The air-conditioning apparatus (200) of any one of claims 1 to 3, wherein the controller (7) is configured to, when the refrigerant leakage sensor (6) detects that refrigerant leakage is present, cause the indoor blower device (2) to operate at a fan rotation speed higher than a maximum value of a fan rotation speed of the indoor blower device (2) in an air conditioning operation.

5. The air-conditioning apparatus (200) of any one of claims 1 to 4, being configured to, when the refrigerant leakage sensor (6) detects that refrigerant leakage is present while operation of the indoor unit (100) is suspended, cause the indoor blower device (2) to operate and move the airflow direction adjusting member (30, 31).

6. The air-conditioning apparatus (200) of any one of claims 1 to 5,
wherein the refrigerant leakage detection sensor (6) is provided below the indoor heat exchanger (3) and the indoor blower device (2).

## Patentansprüche

1. Klimaanlage (200), die eingerichtet ist, mit einem brennbaren Kältemittel befüllt zu werden, das eine Dichte höher als Luft unter Atmosphärendruck aufweist, aufweisend zumindest:
eine Außeneinheit (150) mit einem Außenwärmetauscher (16),
eine Inneneinheit (100), die über ein Kältemittelrohr mit der Außeneinheit (150) verbunden ist,
wobei die Inneneinheit (100) umfasst:
ein Gehäuse (1), das von einem auf dem Fussboden stehenden Typ ist, aufweisend einen Bodenoberflächenteil (1D), der als eine Platzierungsoberfläche dient, aufweisend:
einen Lufteinlass (1B), der in einem unteren Abschnitt des Gehäuses (1) ausgebildet ist,
einen Luftauslass (1A), der in einem oberen Abschnitt des Gehäuses über dem Lufteinlass (1B) ausgebildet ist, und
einen Luftdurchlass (R1), der im Gehäuse (1) ausgebildet ist und sich vom Lufteinlass (1B) zum Luftauslass (1A) erstreckt;
ein Luftströmungsrichtungsanpassungselement (30, 31) mit einer Plattenform, das am Luftauslass (1A) des Gehäuses (1) angeordnet ist und eingerichtet ist, eine Richtung von aus dem Luftauslass (1A) ausgeblasener Luft zu ändern;
einen Innenwärmetauscher (3), der im Luftdurchlass (R1) im Gehäuse (1) angeordnet ist; **gekennzeichnet durch**:
eine Innengebläseeinrichtung (2), die im Luftdurchlass (R1) im Gehäuse (1) stromaufwärts und unterhalb des Innenwärmetauschers (3) angeordnet ist; und
einen Kältemittelleckagesensor (6), der im Luftdurchlass (R1) im unteren Abschnitt des Gehäuses (1) oben auf dem Bodenoberflächenteil (1D) angeordnet ist,
wobei die Klimaanlage (200) ferner eine Steuereinheit (7) umfasst, die eingerichtet ist, wenn der Kältemittelleckagesensor (6) detektiert, dass Kältemittelleckage vorliegt, die Innengebläseeinrichtung (2) zu veranlassen, das Luftströmungsrichtungsanpassungselement (30, 31) zu betätigen und in Drehung zu versetzen, wobei
das Luftströmungsrichtungsanpassungselement (30, 31) aufweist:
eine erste Luftströmungsleitplatte (31), die sich parallel zu einer vertikalen Richtung erstreckt und deren Ausrichtung in einer lateralen Richtung veränderbar ist, und
eine zweite Luftströmungsleitplatte (30), die sich parallel zur lateralen Richtung erstreckt und der ersten Luftströmungsleitplatte (31) zugewandt ist und deren Ausrichtung in der vertikalen Richtung veränderbar ist, und
die Steuereinheit (7) eingerichtet ist, wenn der Kältemittelleckagesensor (6) detektiert, dass Kältemittelleckage vorliegt,
einen Wechselbetrieb des abwechselnden Änderns einer Richtung der ersten Luftströmungsleitplatte (31) in der lateralen Richtung durchzuführen, und
die zweite Luftströmungsleitplatte (30) nach oben zu drehen in einem Zustand, in dem die zweite Luftströmungsleitplatte (30) nach unten zeigt, und eingerichtet ist, die zweite Luftströmungsleitplatte (30) in Drehung zu versetzen nach Durchführen des Wechselbetriebs der ersten Luftströmungsleitplatte (31), und eine zeitliche Verzögerung zwischen dem Durchführen des Wechselbetriebs der ersten Luftströmungsleitplatte (31) und der Drehung der zweiten Luftströmungsleitplatte (30) aufweist.

2. Klimaanlage (200) nach Anspruch 1, wobei
die Steuereinheit (7) eingerichtet ist, wenn der Kältemittelleckagesensor (6) detektiert, dass Kältemittelleckage vorliegt, einen Wechselbetrieb des abwechselnden Änderns einer Richtung des Luftströmungsrichtungsanpassungselements (30, 31) zwischen einer ersten Richtung und einer zweiten Richtung entgegen der ersten Richtung durchzuführen.

3. Klimaanlage (200) nach Anspruch 1 oder 2, wobei die Steuereinheit (7) eingerichtet ist, eine Geschwindigkeit des Wechselbetriebs des Luftstömungsrichtungsanpassungselements (30, 31) einer Gebläsdrehgeschwindigkeit der Innengebläseeinrichtung (2) zu Grunde zu legen.

4. Klimaanlage (200) nach einem der Ansprüche 1 bis 3, wobei die Steuereinheit (7) eingerichtet ist, wenn der Kältemittelleckagesensor (6) detektiert, dass Kältemittelleckage vorliegt, die Innengebläseeinrichtung (2) zu veranlassen, mit einer Gebläsedrehgeschwindigkeit höher als ein Maximalwert einer Gebläsdrehgeschwindigkeit der Innengebläseeinrichtung (2) in einem Klimatisierungsbetrieb zu arbeiten.

5. Klimaanlage (200) nach einem der Ansprüche 1 bis 4, die eingerichtet ist, wenn der Kältemittelleckagesensor (6) detektiert, dass Kältemittelleckage vorliegt, während der Betrieb der Inneneinheit (100) ausgesetzt ist, die Innengebläseeinrichtung (2) zu veranlassen, das Luftströmungsrichtungsanpassungselement (30, 31) zu betätigen und in Bewegung zu versetzen.

6. Klimaanlage (200) nach einem der Ansprüche 1 bis 5,
wobei der Kältemittelleckagesensor (6) unterhalb des Innenwärmetauschers (3) und der Innengebläseeinrichtung (2) vorgesehen ist.

## Revendications

1. Appareil de climatisation (200) configuré pour être rempli avec un fluide frigorigène inflammable ayant une densité supérieure à celle de l'air sous une pression atmosphérique comprenant au moins
une unité extérieure (150) comprenant un échangeur de chaleur extérieur (16),
une unité intérieure (100) reliée à l'unité extérieure (150) par l'intermédiaire d'un tuyau de fluide frigorigène,
l'unité intérieure (100) comprenant :
un boîtier (1) d'un type posé sur le sol comprenant une partie de surface inférieure (1D) servant en tant que surface de placement comportant
un orifice d'entrée d'air (1B) formé dans une partie inférieure du boîtier (1),
un orifice de sortie d'air (1A) formé dans une partie supérieure du boîtier au-dessus de l'orifice d'entrée d'air (1B), et
un passage d'air (R1) formé dans le boîtier (1) et s'étendant de l'orifice d'entrée d'air (1B) jusqu'à l'orifice de sortie d'air (1A) ;
un élément d'ajustement de direction d'écoulement d'air (30, 31) ayant une forme de plaque, disposé au niveau de l'orifice de sortie d'air (1A) du boîtier (1), et configuré pour changer une direction de soufflage de l'air à partir de l'orifice de sortie d'air (1A) ;
un échangeur de chaleur intérieur (3) disposé dans le passage d'air (R1) dans le boîtier (1) ; **caractérisé par**
un dispositif de ventilateur intérieur (2) disposé dans le passage d'air (R1) dans le boîtier (1) en amont et au-dessous de l'échangeur de chaleur intérieur (3) ; et
un capteur de fuite de fluide frigorigène (6) disposé dans le passage d'air (R1) dans la partie inférieure du boîtier (1) sur la partie de surface inférieure (1D),
l'appareil de climatisation (200) comprenant en outre un contrôleur (7) configuré pour, lorsque le capteur de fuite de fluide frigorigène (6) détecte la présence d'une fuite de fluide frigorigène, amener le dispositif de ventilateur intérieur (2) à fonctionner et à tourner l'élément d'ajustement de direction d'écoulement d'air (30, 31), dans lequel
l'élément d'ajustement de direction d'écoulement d'air (30, 31) comprend
une première plaque d'orientation d'écoulement d'air (31) qui s'étend parallèlement à une direction verticale et dont l'orientation peut être changée dans une direction latérale, et
une deuxième plaque d'orientation d'écoulement d'air (30) qui s'étend parallèlement à la direction latérale et qui fait face à la première plaque d'orientation d'écoulement d'air (31), et dont l'orientation peut être changée dans la direction verticale, et
le contrôleur (7) est configuré pour, lorsque le capteur de fuite de fluide frigorigène (6) détecte la présence d'une fuite de fluide frigorigène,
effectuer une opération de basculement pour changer alternativement une direction de la première plaque d'orientation d'écoulement d'air (31) dans la direction latérale, et
tourner la deuxième plaque d'orientation d'écoulement d'air (30) vers le haut dans un état dans lequel la deuxième plaque d'orientation d'écoulement d'air (30) est orientée vers le bas et configuré pour tourner la deuxième plaque d'orientation d'écoulement d'air (30) après avoir effectué l'opération de basculement de la première plaque d'orientation d'écoulement d'air (31), et avoir un décalage temporel entre l'exécution de l'opération de basculement de la première plaque d'orientation d'écoulement d'air (31) et la rotation de la deuxième plaque d'orientation d'écoulement d'air (30).

2. Appareil de climatisation (200) selon la revendication 1, dans lequel
le contrôleur (7) est configuré pour effectuer, lorsque le capteur de fuite de fluide frigorigène (6) détecte la présence d'une fuite de fluide frigorigène, une opération de basculement pour changer alternativement une direction de l'élément d'ajustement de direction d'écoulement d'air (30, 31) entre une première direction et une deuxième direction opposée à la première direction.

3. Appareil de climatisation (200) selon la revendication 1 ou 2, dans lequel le contrôleur (7) est configuré pour baser une vitesse de l'opération de basculement de l'élément d'ajustement de direction d'écoulement d'air (30, 31) sur une vitesse de rotation de ventilateur du dispositif de ventilateur intérieur (2).

4. Appareil de climatisation (200) selon l'une quelconque des revendications 1 à 3, dans lequel le contrôleur (7) est configuré pour, lorsque le capteur de fuite de fluide frigorigène (6) détecte la présence d'une fuite de fluide frigorigène, amener le dispositif de ventilateur intérieur (2) à fonctionner à une vitesse de rotation de ventilateur supérieure à une valeur maximum d'une vitesse de rotation de ventilateur du dispositif de ventilateur intérieur (2) dans une opération de climatisation.

5. Appareil de climatisation (200) selon l'une quelconque des revendications 1 à 4, configuré pour, lorsque le capteur de fuite de fluide frigorigène (6) détecte la présence d'une fuite de fluide frigorigène alors que le fonctionnement de l'unité intérieure (100) est suspendu, amener le dispositif de ventilateur intérieur (2) à fonctionner et à déplacer l'élément d'ajustement de direction d'écoulement d'air (30, 31).

6. Appareil de climatisation (200) selon l'une quelconque des revendications 1 à 5,
dans lequel le capteur de détection de fuite de fluide frigorigène (6) est prévu au-dessous de l'échangeur de chaleur intérieur (3) et du dispositif de ventilateur intérieur (2).
